# EUROPEAN PATENT APPLICATION

(11) **EP 1 855 504 A1**
(43) Date of publication of application: **14.11.2007**
(21) Application number: 06712341.4
(22) Date of filing: 25.01.2006
(51) Int. Cl.: H04Q 9/00

(54) **OPERATION SYSTEM AND OPERABLE TERMINAL**

(30) Priority: 04.03.2005 JP 2005060135
(71) Applicant: MATSUSHITA ELECTRIC INDUSTRIAL CO., LTD., Osaka 571-8501 (JP)
(72) Inventor: YOSHIDA, Noriyuki, Matsushita Electric Industrial Co.,Ltd., Osaka-shi, Osaka 540-6207 (JP)
(74) Representative: Holmes, Miles Keeton
(86) International application number: PCT/JP2006/301146
(87) International publication number: WO 2006/095500

(57) **Abstract**

A purpose of the present invention is to prevent an interference of an operating screen with other screens even while the system is operated. In a cellular phone 2, a CPU 14 causes a first CCU 11 to output operation data corresponding to a user's operation. In the operation data, synchronization data used to cause a destination computer to identify a navigation-operation state of a sender and menu ID data used to cause the destination computer to identify a menu selected by the sender are contained. In a navigation system 3, a CPU 33 causes a CCU 31 to output transition data. In the transition data, synchronization data used to cause the destination computer to identify a navigation-operation state to be set in the destination is contained.

## Description

### Technical Field

The present invention relates to an operating system for operating an operated terminal by using an operating terminal and, more particularly, a video device operating system for operating a video device by using a mobile terminal.

### Background Art

As the background art, the navigation system for displaying a navigation screen and an operation screen on a display in a split mode when a rear-sheet remote controller is operated, and then transferring the operation screen in response to an operation made by the rear-sheet remote controller is known (see Patent Literature 1, for example).
Patent Literature 1: JP-A-2003-231427 (see paragraphs [0040], [0041], [0061] and [0061] and [Fig.6])

### Disclosure of the Invention

### Problems that the Invention is to Solve

In the navigation system set forth in Patent Literature 1, the navigation screen is displayed small when the rear-sheet remote controller is operated. Therefore, information about the navigation is not sufficiently transmitted to the persons except the operator.

Therefore, the present invention has been made to solve the above problem, and it is an object of the present invention to provide an operating system whose operating screen does not interfere with other screens even while this system is operated.

### Means for Solving the Problems

An operating system of the present invention includes an operating terminal for outputting operation data corresponding to an operation; and an operated terminal for executing a process corresponding to the operation data being output from the operating terminal; wherein the operated terminal includes a control portion controlling a communicating portion to output transition data in response to an input of the operation data output from the operating terminal, the transition data is used to transfer an operation screen on a displaying portion of the operating terminal, and the operating terminal includes a display control portion transferring the operation screen on the displaying portion in response to the transition data from the operated terminal.

The interpretation of wordings in Claims will be given as follows. The "operation data corresponding to an operation" means data that is output when the operation is executed and controls the operated terminal to perform a particular process.

The "operating terminal" means a terminal that is able to conduct a two-way communication and includes a displaying portion. It is preferable that the two-way communication should be realized by the two-way radio communication system. For example, there are a remote controller, a cellular phone (containing PHS), a personal computer (containing PDA), and the like.

The "operated terminal" means a video device that is able to conduct a two-way communication. It does not matter whether the device is provided to the inside of the vehicle or not. For example, there are a navigation system, a television receiver set, and the like.

The "operation screen" is an image that is shown in response to an operating situation. For example, there are a menu screen shown prior to the operation and a check screen shown after the operation, and the like.

The "displaying portion" means a surface that displays the video image.

The "transfer" means an operation that shifts from one state to the other state. For example, there are an operation that transfers from a menu screen to an operating checking screen, and the like.

The "transition data that is used to transfer an operation screen on a displaying portion of the operating terminal" is a concept that contains that the process corresponding to the operation data from the operating terminal is executed in the operated terminal or the data that is used to cause the operating terminal to identify that the same process has been executed in the operated terminal.

The "in response to the input" means that the input constitutes the condition. For example, there are a condition that signifies "simultaneously with the input", a condition that signifies "after a predetermined time has elapsed since the input", and the like.

In the present invention, the control portion controls a communication portion to output image data corresponding to the operation screen of a transition destination, with the transition data.

The interpretation of wordings in Claim will be given as follows. The "operation screen of a transition destination" means the other operating screen when the operation screen is transferred from one operation screen to the other operation screen.

In the present invention, the control portion controls whether or not to execute a process corresponding to the operation data from the operating terminal in response to terminal identification data from the operating terminal.

The interpretation of wordings in Claim will be given as follows, The "terminal identification data" means the data that is used to identify the operating terminal that outputted the operation data.

In the present invention, the control portion controls the communicating portion to output different transition data in response to the terminal identification data output from the operating terminal so as to differentiate a transition destination from one operation screen every operating terminal.

The interpretation of wordings in Claim will be given as follows. The "to differentiate a transition destination from one operation screen every operating terminal" means that the other operation screen is differentiated every operating terminal when one operation screen is transferred to the other operation screen. It is preferable that the data that correlates the transition destination from one operation screen with the operating terminal should be employed.

### Advantage of the Invention

According to the present invention, there is provided the control portion that controls the communicating portion to output the transition data, which is used to transfer the operation screen on the displaying portion of the operating terminal, in response to the input of the operation data being output from the operating terminal. Therefore, the present invention is capable of providing the operating system whose operating screen does not interfere with other screens even this system is in operation.

### Brief Description of the Drawings

[FIG.1] A schematic view showing an outline of a video device operating system as a best mode for carrying out the present invention.
[FIG.2] A block diagram showing a configuration of the video device operating system as the best mode for carrying out the present invention.
[FIG.3] A flowchart showing an operation of the video device operating system in the present embodiment.
[FIG.4] FIG.4(a) is a view showing a display example of an application selecting screen in a cellular phone, FIG.4(b) is a view showing a display example of an application starting screen in the cellular phone, FIG.4(c) is a view showing a display example of an operation menu selecting screen in the cellular phone,
FIG.4(d) is a view showing a display example of a route guiding menu selecting screen in the cellular phone, FIG.4(e) is a view showing a display example of a display setting menu selecting screen in the cellular phone, FIG.4(f) is a view showing a display example of a facility display menu selecting screen in the cellular phone, FIG.4(g) is a view showing a display example of a convenience store display menu selecting screen in the cellular phone, and FIG.4(h) is a view showing a display example of an operation completion screen in the cellular phone.
[FIG.5] A view showing data formats of operation data and transition data in the present embodiment.
[FIG.6] FIG.6(a) is a view showing a display example of a display of the navigation system that is in operation by the cellular phone, and FIG.6(b) is a view showing a display example of the display of the navigation system after the operation by the cellular phone is completed.

### Description of the Reference Numerals

- 1: video device operating system (operating system)
- 2: cellular phone (operation terminal)
- 3: navigation system (operated terminal)
- 13: ROM (display control portion)
- 14: CPU (display control portion)
- 24: display (displaying portion)
- 31: CCU (communicating portion)
- 32: ROM (control portion)
- 33: CPU (control portion)

### Best Mode for Carrying Out the Invention

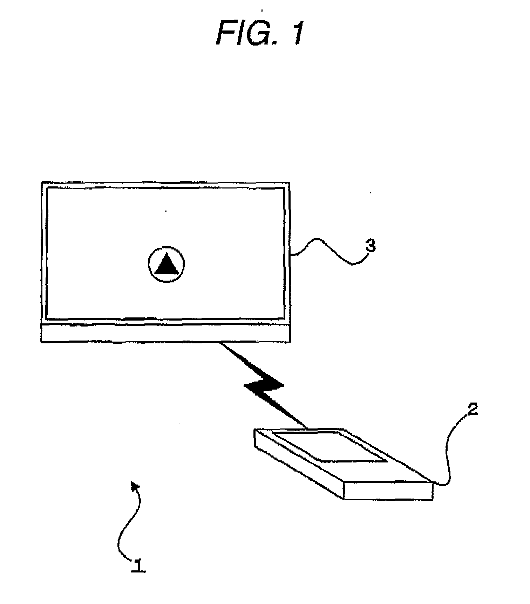

A best mode for carrying out a video device operating system according to the present invention will be explained with reference to FIG.1 to FIG.6 hereinafter.

### <About Overall Configuration>

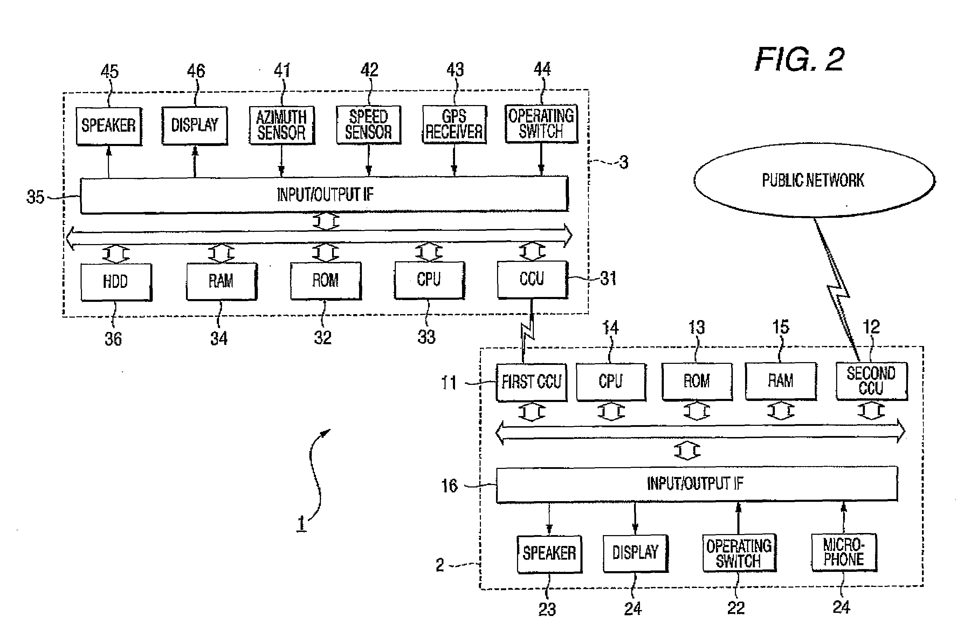

A configuration of a video device operating system 1 according to the present invention will be explained with reference to FIG.1 and FIG.2 hereunder. As shown in FIG.1, a video device operating system 1 (corresponding to an "operating system") includes a cellular phone 2 (corresponding to an "operation terminal") that can conduct the two-way radio communication and a navigation system 3 (corresponding to an "operated terminal") that can conduct the two-way radio communication with the cellular phone 2. In the present embodiment, as a two-way radio communication system, the Bluetooth (registered trademark) system utilizing a 2.4 GHz band is employed.

### <About Configuration of Cellular Phone 2>

As shown in FIG.2, the cellular phone 2 includes a first CCU 11 for controlling the communication with the navigation system 3, a second CCU 12 for controlling the communication with a public network, a ROM 13 (corresponding to a "display control portion") for storing various programs, a CPU 14 (corresponding to a "display control portion") for executing the program stored in the ROM 13, a RAM 15 for holding various data, and an input/output IF 16 interposed between the RAM 15 and various peripheral equipments to input/output the data, These devices are connected mutually via the bus.

In addition to the phone talking program for carrying out the phone talking process, the navigation operating program for outputting the operation data that controls the navigation system 3 to execute a particular operation (referred to as a "navigation-operation" hereinafter) is stored in the ROM 13. The navigation-operation may be acquired from the navigation system 3 via the first CCU 11, or may be acquired from the server on the public network via the second CCU 12. Also, various data constituting the operation data, image data corresponding to an operation screen, and others are stored in the ROM 13.

In the input/output IF 16, a microphone 21 and an operating switch 22 are connected to the input side, and the data fed from these devices are input into the RAM 15. In contrast, a speaker 23 and a display 24 (corresponding to a "displaying portion") are connected to the output side, and the data fed from the CPU14, and the like are output to the speaker 23 and the display 24.

### <About Configuration of Navigation System 3>

As shown in FIG.2, the navigation system 3 includes a CCU 31 (corresponding to a "communicating portion") for controlling the communication with the cellular phone 2, a ROM 32 (corresponding to a "control portion") for storing various programs, a CPU 33 (corresponding to a "control portion") for executing the program stored in the ROM 32, a RAM 34 for holding various data, an input/output IF 35 interposed between the RAM 34 and various peripheral equipments to input/output the data, and a HDD 36 for storing various data. These devices are connected mutually via the bus.

In addition to the navigation program for executing the navigation program that corresponds to the operation data fed from the cellular phone 2, a transition program for outputting the transition data in response to the operation data is stored in the ROM 32.

In the input/output IF 35, an azimuth sensor 41, a speed sensor 42, a GPS receiver 43, and an operating switch 44 are connected to the input side. The data from these devices are input into the RAM 35. On the contrary, a speaker 45 and a display 46 are connected to the output side. The data fed from the CPU 34, and the like are output to the speaker 45 and the display 46.

### <About Operation>

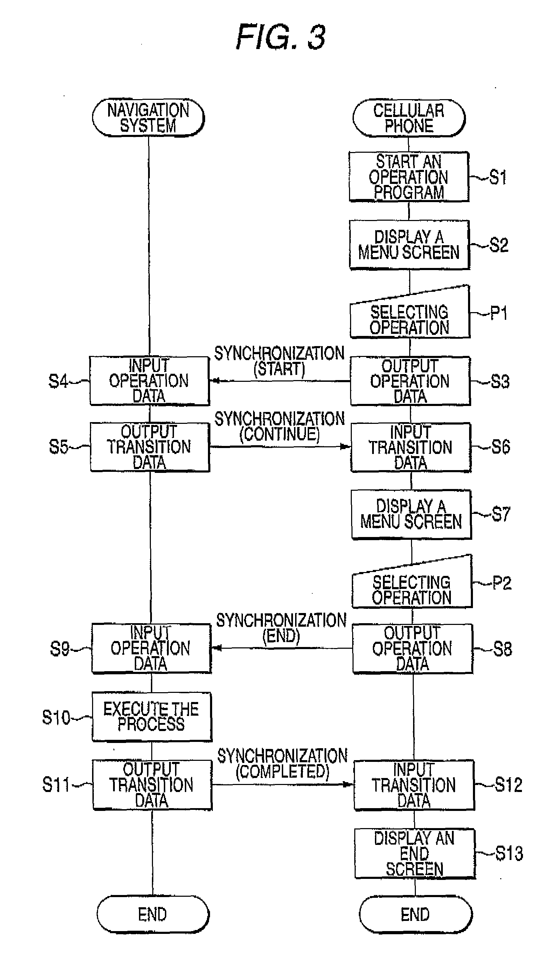

An operation of the video device operating system 1 constructed as above will be explained with reference to FIG.3 to FIG.6 hereunder. As shown in FIG.3, while the CPU 14 interprets respective programs stored in the ROM 13 in the cellular phone 2 and the CPU 33 interprets respective programs stored in the ROM 32 in the navigation system 3, following processes are executed.

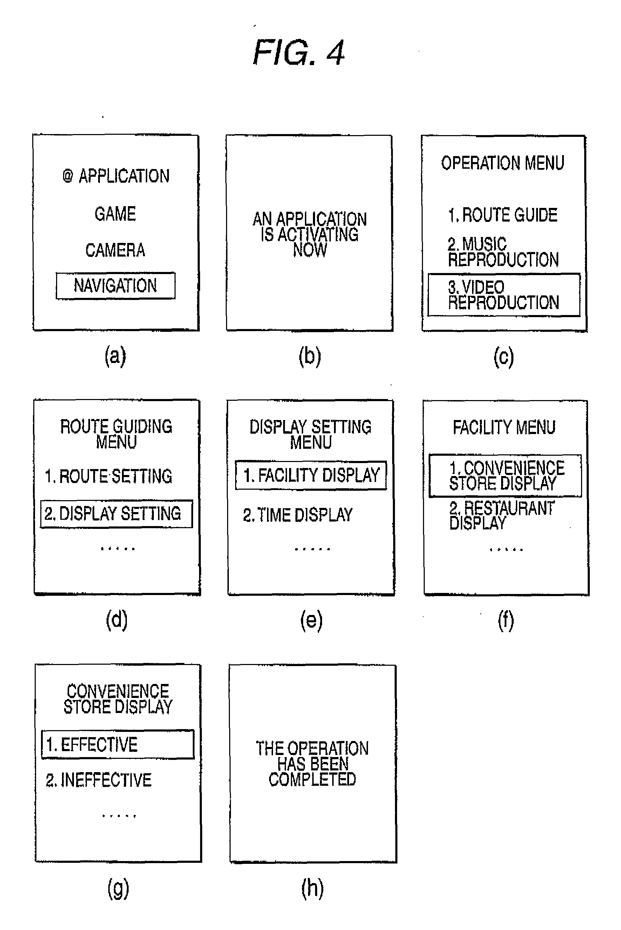

In the cellular phone 2, the CPU 14 starts the navigation-operation program in response to the user's starting instruction given by the operating switch 22 (step S1). At this time, it is preferable that an "@ Appli" screen (see F1G.4(a)) should be switched to a "An application is starting up" screen (see FIG.4(b)) on the display 24. Also, the data for causing the CPU 14 to discriminate the navigation system 3 is the navigation system 3 may be registered in advance, and then the starting process may be executed under the condition that the cellular phone 2 received this data from the navigation system 3.

When the start of the navigation-operation program is completed, the CPU 14 controls the display 24 to display a menu screen (step S2). At this time, an "Operation menu" is displayed as an operation screen on the display 24 (see FIG.4(c)), and the user selects the menu by the operating switch 22 (P1). In the present embodiment, a following explanation will be made on the assumption that "Route guide" is selected.

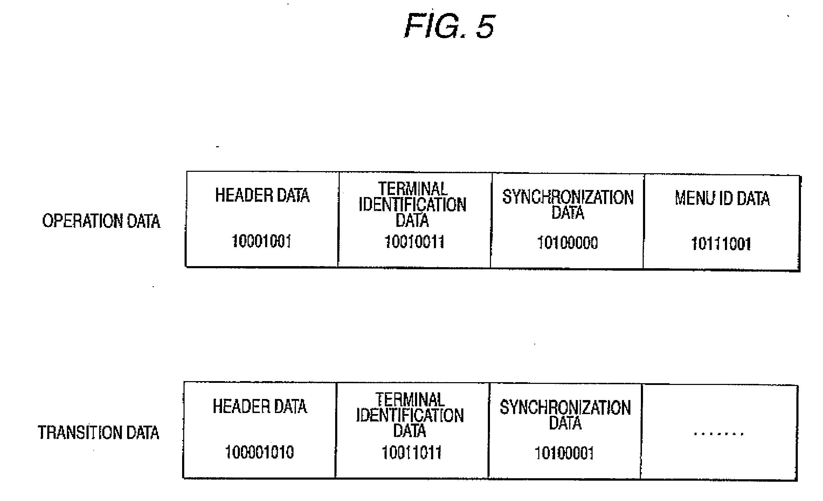

When the route guide is selected, the CPU 14 controls the first CCU 11 to output the operation data responding to the user's operation (step S3). Here, the operation data is the data that is constructed by combining together various data stored in the ROM 13. As shown in FIG.5, "Header data" used to cause the destination computer to identify that the transmitted data is the operation data, "Terminal identification data" used to cause the destination computer to identify the sender, "Synchronization data" used to cause the destination computer to identify a navigation-operation state of the sender, and "Menu ID data" used to cause the destination computer to identify a menu that has been selected by the sender are contained in the operation data. In step S3, in the operation data, the data used to cause the CPU 33 of the navigation system 3 to identify that the navigation-operation is started in the cellular phone 2 is contained as the synchronization data, and the data used to cause the CPU 33 of the navigation system 3 to identify that the selected menu is the route guide is contained as the menu ID data.

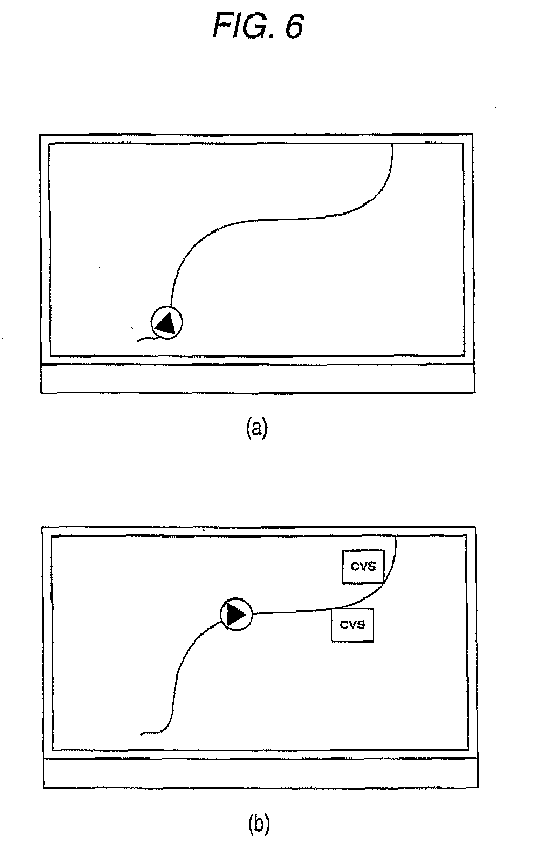

When the operation data is output from the cellular phone 2, the CPU 33 of the navigation system 3 controls the input/output IF 35 to input the operation data received by the CCU 31 into the RAM 34 (step S4). At this time, since the synchronization data indicates that the navigation-operation is started in the cellular phone 2, the process for making the operation data sent from cellular phones except the cellular phone 2 ineffective is executed by using the terminal identification data. Also, even though the operation data is input, the display 46 does not display the operation screen corresponding to the menu ID data but displays the navigation screen as it is (see FIG.6(a)),

When the operation data is input, the CPU 33 outputs the transition data to the CCU 31 (step S5). Here, the transition data is constructed by combining various data stored in the HDD 36. As shown in FIG.5, "Header data" used to cause the destination computer to identify that the transmitted data is the transition data, "Terminal identification data" used to cause the computer to identify the sender, and "Synchronization data" used to cause the destination computer to identify a navigation-operation state to be set in the destination are contained in the transition data. In step S5, the data used to cause the CPU 14 of the cellular phone 2 to identify that the navigation-operation is to be continued in the cellular phone 2 is contained in the transition data as the synchronization data.

When the transition data is output from the navigation system 3, the CPU 14 of the cellular phone 2 controls the input/output IF 16 to input the transition data received by the first CCU 11 into the RAM 15 (step S6).

When the transition data is input, the CPU 14 controls the display 24 to display the operation screen corresponding to the transition data (step S7). In step S6, since the data used to cause the CPU 14 of the cellular phone 2 to identify that the navigation-operation is to be continued in the cellular phone 2 is input as the synchronization data, "Route guiding menu", is displayed on the display 24 as the operation screen of the transition destination (see FIG.4(d)), and the user selects a menu by the operating switch 22 (P2). In the present embodiment, the processes similar to those from step S3 to step S7 are repeated, and the operation screen is shifted in order of "Route guiding menu" (see FIG.4(d)), "Display setting menu" (see FIG.4(e)), "Facility display menu" (see FIG.4(f)), and "Convenience store display" (see FIG.4(g)). In the following, an explanation is given on the assumption that "Effective" of "Convenience store display" is selected finally.

When "Effective" is selected from "Convenience store display", the CPU 14 controls the first CCU 11 to output the operation data corresponding to the user's operation (step S8). At this time, in the operation data, the data used to cause the CPU 33 of the navigation system 3 to identify that the navigation-operation is to be ended in the cellular phone 2 is contained as the synchronization data, and the data to cause the CPU 33 of the navigation system 3 to identify that the selected menu is "Effective" of "Convenience store display" is contained as the menu ID data.

When the operation data is output from the cellular phone 2, the CPU 33 of the navigation system 3 controls the input/output IF 35 to input the operation data received by the CCU 31 into the RAM 34 (step S9). At this time, since the synchronization data indicates that the navigation-operation is ended in the cellular phone 2, the process for making the operation data from cellular phones except the cellular phone 2 effective is executed by using the terminal identification data.

When the operation data is input, the CPU 33 executes the process corresponding to the operation data (step S10). In the present embodiment, since the menu ID data contained in the operation data indicates that "Convenience store display" is effective, the CPU 33 controls the display 46 to display "CVS" as a convenience store mark together with the navigation screen (see FIG.6(b)).

When the process corresponding to the operation data is executed, the CPU 33 controls the CCU 31 to output the transition data (step S11). In the transition data, the data used to cause the CPU 14 of the cellular phone 2 to identify that the navigation-operation is to be completed in the cellular phone 2 is contained as the synchronization data.

When the transition data is output from the navigation system 3, the CPU 14 of the cellular phone 2 controls the input/output IF 16 to input the transition data received by the first CCU 11 into the RAM 15 (step S12).

When the transition data is input, the CPU 14 controls the display 24 to display the operation screen corresponding to the transition data (step S13), In step S12, since the data used to cause the CPU 14 of the cellular phone 2 to identify that the navigation-operation is to be ended in the cellular phone 2 is input as the synchronization data, "The operation has been completed" is displayed on the display 24 as the operation screen of the transition destination (see FIG.4(h)).

### <Advantage of Present Embodiment>

According to the present embodiment mentioned above, the cellular phone 2 transfers/displays the operation screen on the display 24 in response to the transition data from the navigation system 3. Therefore, it is unnecessary for the navigation system 3 to the operation screen in operation on the display 46, and the operation screen never interferes with other screens even in operation. In other words, it is feasible to transfer sufficiently the navigation information the persons except the operator while the operator is operating the operation screen.

### <Variation>

In the above explanation, the image data corresponding to the operation screen is stored in the ROM 13. But other embodiments may be employed. For example, the navigation system 3 may read the image data from the HDD 36 and output this image data together with the transition data. Also, the cellular phone 2, when received the transition data, may acquire the image data from the server on the public network. According to these embodiments, the cellular phone 2 has only to hold adequately the necessary image data in the RAM 15. Therefore, there is no need to provide the memory medium, which always stores the image data corresponding to all operation screens, in the cellular phone 2.

In the above explanation, the operation screen is transferred in order of "Route guiding menu" (see FIG.4(d)), "Display setting menu" (see FIG.4(e)), "Facility display menu" (see FIG.4(f)), and "Convenience store display menu" (see FIG.4(g)). But the operation screen may be directly transferred from "Route guiding menu" (see FIG.4(d)) to "Convenience store display menu" (see FIG.4(g)). Concretely, the navigation system 3 stores a correspondence between the transition data having the convenience store display as the operation screen of the transition destination and the terminal identification data indicating the cellular phone 2 in the HDD 36. Then, when the navigation system 3 receives the synchronization data indicating an operation starting state from the cellular phone 2, this navigation system outputs the transition data having the convenience store display as the operation screen of the transition destination. According to this embodiment, it can be differentiated every cellular phone whether or not the intermediate operations should be omitted. Also, the operation to be allowed can be differentiated every cellular phone.

The present invention is explained in detail with reference to the particular embodiment. But it is obvious for those skilled in the art that various variations and modifications can be applied without departing from a spirit and a scope of the present invention.
This application is based upon Japanese Patent Application (Patent Application No.2005-060135) filed on March 4, 2005; the contents of which are incorporated herein by reference.

### Industrial Applicability

As described above, the operating system according to the present invention possesses such an advantage that the operation screen never interferes with other screens even while the user is operating the operation screen, and is useful to the video device operating system that operates the video device by using the mobile terminal, and the like,

## Claims

1. An operating system, comprising:
an operating terminal, the operating terminal outputting operation data corresponding to an operation; and
an operated terminal, the operated terminal executing a process corresponding to the operation data being output from the operating terminal; and wherein
the operated terminal includes a control portion that causes a communicating portion to output transition data in response to an input of the operation data from the operating terminal, the transition data is used to transfer an operation screen on a displaying portion of the operating terminal; and
the operating terminal includes a display control portion transferring the operation screen on the displaying portion in response to the transition data from the operated terminal.

2. An operated terminal for executing a process corresponding to operation data being output from an operating terminal, comprising:
a control portion which causes a communicating portion to output transition data in response to an input of the operation data from the operating terminal, the transition data is used to transfer an operation screen on a displaying portion of the operating terminal.

3. The operated terminal of claim 2, wherein the control portion causes the communication portion to output image data corresponding to the operation screen of a transition destination, with the transition data.

4. The operated terminal of claim 1, wherein the control portion controls whether or not to execute a process corresponding to the operation data from the operating terminal in response to terminal identification data from the operating terminal.

5. The operated terminal of claim 1, wherein the control portion causes the communicating portion to output different transition data in response to the terminal identification data being output from the operating terminal so as to differentiate a transition destination from one operation screen every operating terminal.
